# EUROPÄISCHE PATENTANMELDUNG

(11) **EP 4 682 585 A1**
(43) Veröffentlichungstag der Anmeldung: **21.01.2026**
(21) Anmeldenummer: 25188473.0
(22) Anmeldetag: 09.07.2025
(51) Int. Cl.: G01S 7/52, G01S 15/10, G01S 15/931

(54) **VERFAHREN ZUM BETREIBEN EINES ULTRASCHALLSENSOR**

(30) Priorität: 15.07.2024 DE 102024120177
(71) Anmelder: Elmos Semiconductor Aktiengesellschaft, 44227 Dortmund (DE)
(72) Erfinder: Kribus, Andreas, 44388 Dortmund (DE); Beier, Gerald, 44287 Dortmund (DE); Schlautmann, Guido, 48341 Altenberge (DE); Kreiß, Dennis, 30559 Hannover (DE); Schmidt, André, 51674 Wiehl (DE); Stefanie, Heppekausen, 45239 Essen (DE); Spiegel, Egbert, 45770 Marl (DE)
(74) Vertreter: dompatent

(57) **Zusammenfassung**

Vorgeschlagen wird ein Verfahren zum Betreiben eines Ultraschallsensors, wobei in einem Betriebszyklus im Anschluss an das Ende der Messung eine Diagnose durchgeführt, bei der das Schwingelement des Ultraschallsensors unter Beibehaltung sämtlicher Konfigurationseinstellungen des Ultraschallsensors schwach angeregt wird. Dieser Vorgang wird vorzugsweise nach jeder Messung durchgeführt, so dass Fehlfunktionen oder drohende Fehlfunktionen des Ultraschallsensors rechtzeitig und für jede Messung erkannt werden können.

## Beschreibung

Die Erfindung betrifft ein Verfahren zum Betreiben eines Ultraschallsensor, der ein elektrisch ansteuerbares Schwingelement und eine elektronische Schaltungsanordnung mit einer Ansteuerschaltung zum Ansteuern des Schwingelements und einer Signalverarbeitungsschaltung zur Verarbeitung von von dem Schwingelement gelieferten elektrischen Messsignalen aufweist und insbesondere Teil eines Mess- und Kommunikationsbussystems ist, das eine Busleitung aufweist, an die der mindestens eine Ultraschallsensor und eine Steuereinheit zur Ausgabe von Steuerdaten an den mindestens einen Ultraschallsensor sowie zum Empfang von Ergebnisdaten von dem mindestens einen Ultraschallsensor angeschlossen sind.

Ultraschallsensoren werden im Automobilsektor beispielsweise für Parkassistenzsysteme aber auch als Unterstützung beim autonomen Fahren eingesetzt. Von Bedeutung dabei ist es, dass aus Sicherheitsgründen die Funktionstüchtigkeit derartiger Ultraschallsensoren stets gewährleistet sein sollte.

Im Stand der Technik wird diesbezüglich dergestalt verfahren, dass von Zeit zu Zeit zwischen einzelnen Betriebszyklen Diagnosen durchgeführt werden, um den Anregungspfad, über den die Ansteuerung des Schwingelements zwecks Erzeugung von Ultraschall-Wellen erfolgt, und um den Empfangspfad für die elektrischen Signale aufgrund von Echos zu überprüfen.

DE 10 2022 120 106 B3 beschreibt eine modifizierte UART-Datenübertragung für die zeitnahe Datenübertragung von Echodaten an ein übergeordnetes Rechnersystem.

DE 10 2017 203 136 A1 beschreibt eine Sensoreinrichtung mit einem Sensor zur Umgebungsüberwachung mit Hilfe von Schallwellen.

Die bisher durchgeführten Diagnosen sind aus verschiedenen Gründen nicht optimal.

Aufgabe der Erfindung ist es, den Betrieb eines Ultraschallsensors durch Optimierung der Diagnosephasen funktionssicherer zu gestalten.

Zur Lösung dieser Aufgaben betrifft die Erfindung ein Verfahren zum Betreiben eines Ultraschallsensors, der ein elektrisch ansteuerbares Schwingelement (elektroakustischer Wandler, auch Transducer und in diesem Fall Ultraschall-Transducer genannt) und eine elektronische Schaltungsanordnung mit einer Ansteuerschaltung zum Ansteuern des Schwingelements und einer Signalverarbeitungsschaltung zur Verarbeitung von von dem Schwingelement gelieferten elektrischen Messsignalen aufweist und der Teil eines Mess- und Kommunikationsbussystems ist, das eine Busleitung aufweist, an die der mindestens eine Ultraschallsensor und eine Steuereinheit zur Ausgabe von Steuerdaten an den mindestens einen Ultraschallsensor sowie zum Empfang von Ergebnisdaten von dem mindestens einen Ultraschallsensor angeschlossen sind, wobei bei dem Verfahren
- der mindestens eine Ultraschallsensor zur Durchführung einer Vielzahl von zeitlich aufeinanderfolgenden Betriebszyklen mit einem von mehreren möglichen Konfigurationsparametersätzen betrieben wird,
- wobei jeder Betriebszyklus aufweist
   - eine Anregungsphase, in der das Schwingelement des mindestens einen Ultraschallsensors zum Aussenden eines Ultraschallsignals mit einem Anregungs-Ansteuerungssignal mit einer vordefinierten Signalform und einer vordefinierten Amplitude, die durch den aktuell verwendeten Konfigurationsparametersatz bestimmt sind, angeregt wird,
   - eine sich an die Anregungsphase anschließende Ausschwingphase, in der das Schwingelement ausschwingt,
   - eine sich an die Ausschwingphase anschließende Empfangsphase, in der das Schwingelement durch potentielle Ultraschall-Echosignale angeregt wird und ein dadurch von dem Schwingelement erzeugtes elektrisches Messsignal in der Signalverarbeitungsschaltung verarbeitet wird,
   - eine Datenübertragungsphase zur Übertragung von das Ergebnis der Signalverarbeitung repräsentierenden Ergebnisdaten von dem mindestens einen Ultraschallsensor über die Busleitung an die Steuereinheit und
   - eine Pausenphase zwischen dem Ende der Empfangsphase und dem Beginn der Datenübertragungsphase und
- wobei für vorgebbare Betriebszyklen das Aufeinanderfolgen von Betriebszyklen innerhalb der Pausenphase eines Betriebszyklus eine Diagnosephase zur Überprüfung des mindestens einen Ultraschallsensors auf seine Funktionssicherheit hindurchgeführt wird, indem
- das Schwingelement des mindestens einen Ultraschallsensors mit einem Diagnoseansteuerungssignal angeregt wird, das die gleiche Signalform wie das Anregungs-Ansteuerungssignal aufweist, welches in der Anregungsphase des besagten Betriebszyklus zum Anregen des Schwingelements verwendet worden ist, und eine um mehrere Größenordnungen kleinere Amplitude als das Anregungs-Ansteuerungssignal aufweist.

Die Erfindung wird nachfolgend anhand der Ausbildung des Ultraschallsensors als Ultraschall-Transceiver erläutert.

Erfindungsgemäß wird der Ultraschall-Transceiver, wie üblich, gemäß einer Vielzahl von zeitlich aufeinanderfolgenden Betriebszyklen betrieben. Typischerweise ist ein Betriebszyklus, was die Ansteuerung des elektroakustischen Schwingsignals und die Verarbeitung von Empfangssignalen betrifft, durch Konfigurationsparameter definiert, die unter anderem die Form und Größe des Anregungs-Ansteuerungssignals und die Betriebsparameter der Schaltungskomponenten (beispielsweise Filter) bestimmen.

Erfindungsgemäß ist nun vorgesehen, dass zumindest während einiger der Betriebszyklen im Anschluss an die Empfangsphase eine Diagnosephase durchgeführt wird, bei der das Schwingelement unter Beibehaltung der Konfigurationsparameter, die zuvor in dem besagten Betriebszyklus verwendet wurden, angeregt wird, allerdings mit einer gegenüber dem Anregungs-Ansteuerungssignal in der Anregungsphase des besagten Betriebszyklus deutlich verringerten Amplitude. Durch diese geringfügige Anregung des Schwingelements erzeugt dieses derart schwache Ultraschallwellen, dass ein Echosignal nicht zu erwarten ist bzw. nicht störend ist für die Diagnose. Somit durchläuft sozusagen das Diagnoseansteuerungssignal den Empfangspfad, womit anhand der Verarbeitung des Diagnoseansteuerungssignals erkannt werden kann, ob sowohl das Schwingelement vorschriftsmäßig arbeitet als auch der Empfangspfad funktionstüchtig ist.

Ein Wesensmerkmal der Erfindung ist es also, einen Ultraschall-Transceiver zu Diagnosezwecken mit sehr geringer elektrischer Leistung anzuregen, um sein Schwingelement in vergleichsweise geringem Ausmaß zum Schwingen zu bringen, um dann sozusagen das An- und Ausschwingen des Schwingelements und das dabei am Ultraschall-Transceiver anliegende Signal auszuwerten. Das erfolgt bei gleicher Konfiguration, bei der der Ultraschall-Transceiver in der vorherigen eigentlichen Messphase betrieben wurde. Das am Ultraschall-Transceiver anliegende Signal während der eigentlichen Anregungsphase zum Detektieren von Echos eignet sich nicht zu Diagnosezwecken, da es viel zu groß ist und den Empfangspfad übersteuert. Auch könnte dieses Signal bereits mit Nah-Echos gestört sein. Die sehr schwache Anregung in der Diagnosephase erlaubt es, das Schwingen des Schwingelements messbar zu halten, wobei ggf. erzeugte Echos derart gering sind, dass sie keine Rolle spielen.

Erfindungsgemäß wird in regelmäßigen oder unregelmäßigen Abständen und insbesondere bei jeder Messung überprüft, ob der Ultraschall-Transceiver korrekt arbeitet. Dabei wird erfindungsgemäß die Anregung des Ultraschall-Transceivers, der Transducer selbst, der Signalpfad und die im aktuellen Konfigurationsprofil ausgewählten Konfigurationsparameter vollständig und applikationsnah geprüft. Auch zeitig kurz auftretende Störungen, die die Messung beeinflussen, können erkannt werden, und zwar durch die zeitliche Nähe der Diagnose zur betreffenden Messung und insbesondere zu jeder Messung. Sporadische Fehler aus anderen Schaltungen, die zur Konfiguration benötigt werden, werden durch das Diagnosesignal mit detektiert (wie beispielsweise Eeprom- und Registerfehler), wohingegen bei einer Neukonfiguration des Gesamtsystems für die Diagnose, was bisher Stand der Technik ist, Fehlerkonfigurationen aus vorangegangenen Messungen nicht sichtbar sind.

Bisher wurde also die Diagnose eines Ultraschall-Transceivers als eigenständige Messung durchgeführt, was zusätzliche Zeit benötigt und zur Unterbrechung der Messsequenz führt. Denn nach dem bisherigen Konzept muss der Messzyklus, d.h. die Aufeinanderfolge von Betriebszyklen, unterbrochen werden, um die Konfigurationsparameter für eine Diagnose zu laden, die Diagnose durchzuführen, die Konfiguration für die nächste Messung wieder herzustellen und den Messzyklus neu zu starten. Die Diagnose-Konfiguration benötigt übrigens zusätzlichen Programmspeicher wie RAM oder Flash. Mit unter wird auch im Stand der Technik der Sende- und Empfangspfad umgeschaltet, um für die Diagnose einen anderen Pfad zu verwenden als für die Applikation (Messung) selbst. Es ist also bisher so, dass für die Diagnose ein ausgewählter Satz an Konfigurationsdaten für Anregung, Verstärkung, Filtereinstellung, Filterkoeffizienten und Empfang genutzt wurde, der aber nicht zwingend den für die eigentliche Applikation genutzten Einstellungen entsprach. Durch das neue Konzept, die Diagnosephase automatisch mit dem gleichen Konfigurationsprofil durchzuführen (einzige Ausnahme ist die deutlich verringerte Amplitude des Anregungssignals) wird die Diagnose zeitoptimiert und anwenderfreundlicher. Es sind keine Umstellungen der Konfigurationsparameter erforderlich.

Zum Konfigurationsprofil zählen beispielsweise die Anzahl, Form und Frequenz der Pulse der typischerweise für die Ansteuerung des Schwingelements verwendeten Burst-Anregungssignale, der Anregungsstrom bzw. die Anregungsspannung, also die Anregungsleistung, die Verstärkung, die Messdauer, Diagnoseparameter, die Kodierung, Chirp-up und Chirp-down-Einstellungen etc. Das Profil kann für den Nahbereich, für den Fernbereich und für unterschiedlich kodierte Signale angelegt und damit flexibel mit dem Messbefehl ausgewählt werden. Das zu diesem Messbefehl "passende" Diagnosesignal nutzt damit immer das jeweilige aktive Konfigurationsprofil.

Der erfindungsgemäße Ansatz ist sowohl bei Ultraschall-Transceivern mit und ohne Übertrager (Transformator) einsetzbar. Dies schließt auch transformatorfreie Systeme mit vollintegrierter Transduceranbindung ein.

Schließlich sei noch darauf hingewiesen, dass das Einschieben der Diagnosephase in den Betriebszyklus keinerlei Verzögerungen für die nach der eigentlichen Messung zu übertragenden Daten und Ergebnissen führt. Für die Diagnose wird eine aus anderen Gründen erforderliche zeitliche Trennung (Pausenphase) genutzt. Eine derartige Pause ist erforderlich, um auf der Datenleitung, mit der ein Ultrall-Transducer typischerweise mit einer Kommandierungseinheit verbunden ist, eine klare Trennung zwischen Echoausgabe und Ergebnis-übermittlung/Datenkommunikation zu schaffen. Das Ergebnis der Diagnose ist vorteilhafterweise komprimiert in einem "in Ordnung/nicht in Ordnung"-Bit komprimiert, welches mit den übrigen Diagnoseergebnissen zusammengefasst ("verodert") nach dem Ende der Messphase übertragen wird. Durch die Übertragung zusätzlicher Diagnoseinformationen wird keine zusätzliche Datenkommunikation erforderlich.

In vorteilhafter Ausgestaltung der Erfindung kann also vorgesehen sein, wie bereits oben angeklungen, dass jeder Konfigurationsparametersatz die Form des Anregungs-Ansteuerungssignals, die Größe von dessen Amplitude, die Größe der Amplitude des Diagnoseansteuerungssignals und Vorgaben für Betriebsparameter von im Anregungspfad für das Anregungs-Ansteuerungssignal und das Diagnoseansteuerungssignal sowie im Empfangspfad für vom mindestens einen Ultraschall-Transceiver gelieferten Mess- und Funktionssicherheitsprüfsignal der Signalverarbeitungsschaltung umfasst.

Wie ebenfalls bereits oben kurz erwähnt, kann der mindestens eine Ultraschall-Transceiver einen Transformator zur Transformation des Anregungs-Ansteuerungssignals und des Diagnoseansteuerungssignals aufweist oder dass der mindestens eine Ultraschall-Transceiver transformatorfrei sein.

Vorteilhafterweise beträgt die Größenordnung, um die die Amplitude des Diagnoseansteuerungssignals kleiner ist als die Amplitude des Anregungs-Ansteuerungssignals des besagte Betriebszyklus ist, 10⁶ bis 10³, insbesondere 10⁵ bis 10³, insbesondere 10⁴ bis 10³ und vorzugsweise 5 * 10⁵ bis 6 * 10³.

Zweckmäßigerweise kann nach einer regelmäßigen oder auch variablen Anzahl von Betriebszyklen der mindestens eine Ultraschall-Transceiver mit einem Betriebszyklus mit Diagnose des mindestens einen Ultraschall-Transceivers auf seine Funktionssicherheit betrieben werden.

Vorteilhafterweise wird allerdings in jedem Betriebszyklus eine Diagnose des mindestens einen Ultraschall-Transceivers auf seine Funktionssicherheit durchgeführt wird.

Alternativ zu einem Ultraschall-Transceiver der Ultraschallsensor zweiteilig ausgebildet sein und einen Ultraschallsender sowie einen Ultraschallempfänger aufweisen, die beide jeweils ein Schwingelement aufweisen, wobei in der Diagnosephase das Schwingelement des Ultraschallempfängers und/oder das Schwingelement des Ultraschallsenders angeregt wird/werden und somit der Empfangspfad des Ultraschallempfängers und/oder der Anregungspfad des Ultraschallsenders auf Funktionssicherheit hin überprüft wird/werden.

Die Erfindung nachfolgend anhand eines Ausführungsbeispiels und unter Bezugnahme auf die Zeichnung näher erläutert. Im Einzelnen zeigen dabei:
- Fig. 1: ein Beispiel für eine typische Topologie eines Ultraschall-Messsystems mit einer Kommandierungseinheit und mehreren Ultraschallsensoren,
- Fig. 2: ein Blockschaltbild der Hauptkomponenten der Ansteuerung eine Ultraschallsensors mit Verdeutlichung des Signalflusses (Anregungspfad und Empfangspfad) und der Ansteuerung verschiedener Komponenten entsprechend einem für den Betriebszyklus gewählten Konfigurationsparametersatz bzw. -profil und
- Fig. 3: Diagramme zur Verdeutlichung des Signalverlaufs am Ultraschallsensor sowohl während der Anregungsphase als auch während der eigentlichen Messphase und der Diagnosephase.

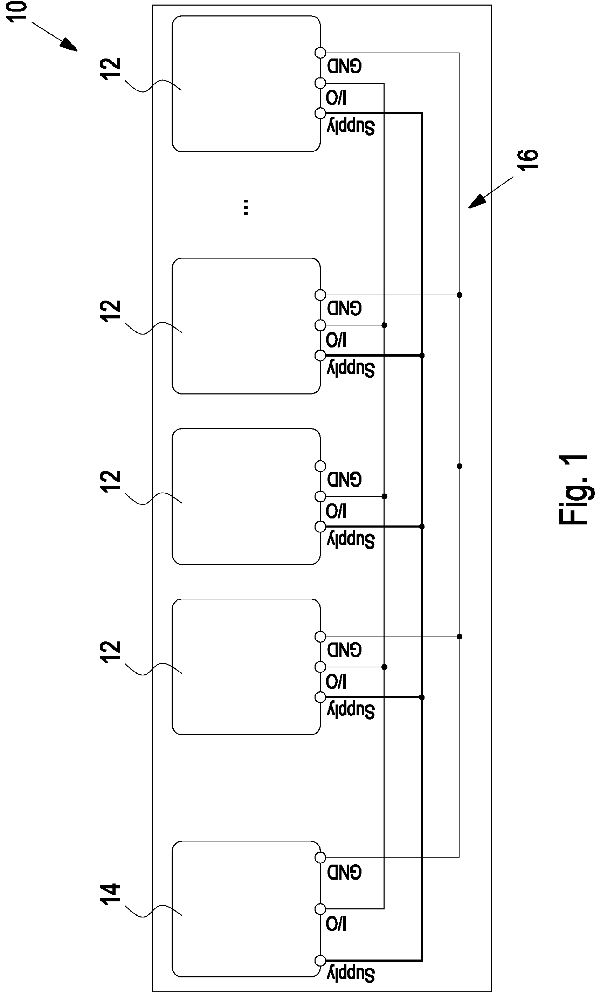

Fig. 1 zeigt einen beispielhaften Aufbau eines Ultraschall-Messsystems 10 mit mehreren Ultraschallsensoren 12 und einer Steuereinheit 14 (Kommandierungseinheit), die sämtlich über einen Kommunikationsbus 16 miteinander verbunden sind. Alternativ kann die Kommunikation auch in Form einer Pointto-Point-Verbindung ausgebildet sein.

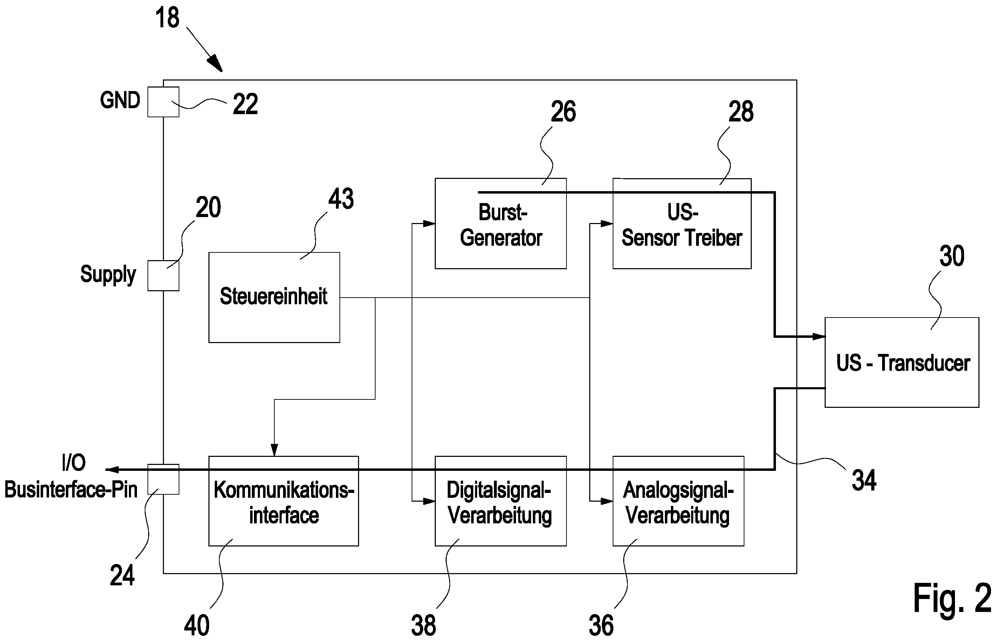

Der für die Erfindung wesentliche Teil der Ansteuereinheit 18 jedes Ultraschallsensors 12 ist in Fig. 2 gezeigt. Die Ansteuereinheit 18 weist Anschlüsse Supply 20 und GND 22 für die elektrische Energieversorgung sowie eine I/O-Schnittstelle 24 für die Kommunikation auf. Die Ansteuereinheit 18 ist versehen unter anderem mit einem Generator 26 für die Erzeugung der Anregungs-Ansteuerungssignale des Ultraschallsensors 12, wobei dieser Generator 26 in diesem Ausführungsbeispiel als Burst-Generator ausgebildet ist. Der Generator 26 steuert einen Treiber 28 an, der das typischerweise extern der Ansteuereinheit 18 angeordnete Schwingelement 30 (US-Transducer) des Ultraschallsensors 12 (über einen Trafo oder aber auch trafolos) anregt, um die zu Messzwecken vorgesehenen Ultraschallwellen zu erzeugen. Der Generator 26 und der Treiber 28 gehören zum Anregungspfad 32 der Ansteuereinheit 18.

Die Ansteuereinheit 18 weist darüber hinaus einen Empfangspfad 34 auf, über den die am Schwingelement 30 bzw. am Ultraschallsensor 12 anstehenden elektrischen Signale verarbeitet und bis zur Schnittstelle 24 übertragen werden. Im Empfangspad 34 befindet sich unter anderem eine Analogsignal-Verarbeitungseinheit 36, die ggf. nach einer Verstärkung des vom Schwingelement 30 erzeugten elektrischen Signals dieses in ein Digitalsignal wandelt. Die Analogsignal-Verarbeitungseinheit 36 ist mit einer Digitalsignal-Verarbeitungseinheit 38, in der alternativ zur Analogsignal-Verarbeitungseinheit 36 die Umsetzung des Analogsignals in ein Digitalsignal erfolgen kann. Das von der Digitalsignal-Verarbeitungseinheit 38 verarbeitete Signal gelangt über ein Kommunikationsinterface 40 zur Datenschnittstelle 24, von wo aus das verarbeitete Signal, also das Ergebnissignal beispielsweise der Messung oder aber auch das Messeergebnis repräsentierende Rohdaten, an die Steuereinheit 14 übertragen werden kann.

Die Schaltungskomponenten Generator, Treiber, Analogsignal-Verarbeitungseinheit und Digitalsignal-Verarbeitungseinheit sind gemäß einem von typischerweise mehreren Konfigurationsprofilen konfigurierbar und mit entsprechenden Konfigurationsparametern betreibbar. Auch das Kommunikationsinterface 40 ist konfigurierbar. Die Konfiguration erfolgt unter anderem durch eine Steuereinheit 43, die zusätzlich auch noch andere Steuerungsfunktionen innerhalb der Ansteuereinheit 18 des Ultraschallsensors 12 übernimmt. Zu den konfigurierbaren Einstellungen gehören unter anderem die Signal-/Frequenzform für die Anregung, d.h. beispielsweise die Anzahl und die Frequenz sowie die Form der Pulse, die der Generator 26 erzeugt, die Größe des zum Schwingelement 30 gelangenden Ansteuerungssignals, die Einstellungen für die beiden Signalverarbeitungseinheit und für das Kommunikationsinterface.

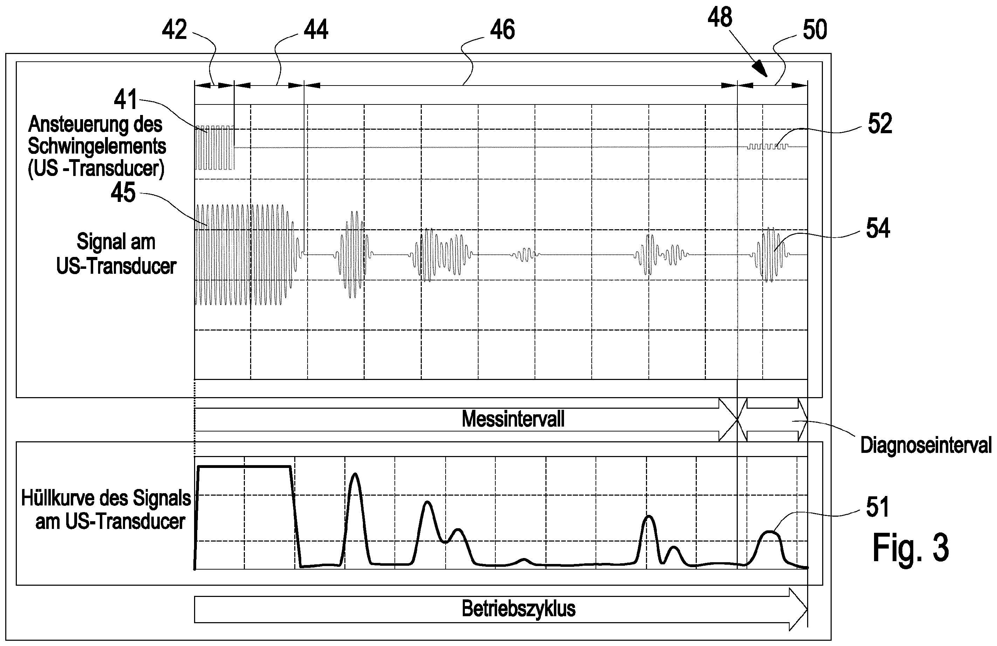

Jeder Ultraschallsensor wird fortlaufend gemäß aufeinanderfolgender Betriebszyklen betrieben. Wie bei Ultraschallsensoren üblich, umfasst, wie beispielsweise die Diagramme in Fig. 3 zeigen, ein Betriebszyklus zu Beginn die Anregungsphase 42, in der der Generator 26 ein Burstsignal erzeugt und der Treiber 28 diese Burstsignal verstärkt an das Schwingelement 30 des Ultraschallsensors 12 gibt. Daraufhin schwingt das Schwingelement 30 an und diese Schwingung hält für gewisse Zeit nach Beendigung der Anregungsphase 42 an (siehe das Schwingungssignal 45 in der Anregungsphase 42 und in der Ausschwingphase 44 in Fig. 3).

An die Ausschwingphase 44 schließt sich die eigentliche Messphase in Form der Empfangsphase 46 an. Am Ende der Empfangsphase 46 liegt auch das Ergebnis der Messung vor (beispielsweise in Form von Daten, die dafür repräsentativ sind, dass sich in einer gewissen Entfernung typischerweise des Fahrzeugs) ein Hindernis befindet, wobei diese Aus- bzw. Bewertung anhand der Messergebnisse mehrerer Ultraschallsensoren in der Steuereinheit 14 des Gesamtmesssystems erfolgt.

An die Empfangsphase 46 schließt sich typischerweise eine Pausenphase 48 an, die zur eindeutigen Trennung zwischen der Echoausgabe (Beendigung des Echosignals) und der Ergebnisübermittlung/Datenkommunikation erforderlich ist.

Erfindungsgemäß wird nun diese Pausenphase 48 für eine Diagnose (siehe die Diagnosephase 50 in Fig. 3) genutzt, um den Ultraschallsensor 12 auf seine Funktionssicherheit hin zu überprüfen. Hierzu wird das Schwingelement 30 des Ultraschallsensors 12 mit einem Diagnoseansteuerungssignal 52 angesteuert, das die gleich Signal- und Frequenzform des Anregungs-Ansteuerungssignals 41 aufweist, jedoch in seiner Amplitude um mehrere Größenordnungen kleiner ist als das Anregungs-Ansteuerungssignal 41. Aufgrund des kleinen Diagnoseansteuerungssignals 52 schwingt das Schwingelement 30 nur schwach (siehe in Fig. 3 bei 54). Diese schwache Schwingung des Schwingelements 30 reicht aber aus, um den Empfangspfad 34 auf seine ordnungsgemäße Funktion hin zu überprüfen. Genauso kann hierdurch auch der Ansteuerungspfad 32 überprüft werden. Die Ergebnisse der Überprüfung (Diagnose) werden wiederum über das Kommunikationsinterface 40 übertragen, und zwar zusammen mit den Ergebnissen der Ultraschall-Messung, indem beispielsweise der das Ergebnis repräsentierende Datenstrom um beispielsweise ein Bit ergänzt wird, das anzeigt, ob die Funktionssicherheit gegeben ist oder nicht, oder auch mehrere Bits, um die Art einer potentiellen Fehlfunktion kodiert übertragen zu können.

In Fig. 3 ist im unteren Teil zu erkennen, wie der Verlauf eines typischen Beispiels für die Hüllkurve des Empfangssignals in der Empfangsphase 46 aussieht. Zu erkennen ist, dass in der Diagnosephase 50 über den Empfangspfad 34 ein Signal 51 verarbeitet und übertragen wird.

In der erfindungsgemäß vorgesehene Diagnosephase 50 wird der Ultraschallsensor 12 bei der gleichen Konfiguration betrieben, wie zuvor in der Anregungs-, Ausschwing- und Empfangsphase, allerdings mit dem (einzigen) Unterschied, dass das Diagnoseansteuerungssignal 52 deutlich kleiner ist als das Anregungs-Ansteuerungssignal 41, was zu einem deutlich kleineren Schwingungssignal 54 in der Diagnosephase 50 als den Schwingungssignal 45 der vorhergegangenen Anregungs- und Ausschwingphase 42 bzw. 44 führt. Im einfachsten Fall wird das in der Diagnosephase 50 am Schwingelement 30 anstehende Signal 51 einem Schwellwert verglichen. Übersteigt das Signal 51 diesen (Diagnose-)schwellwert, arbeitet der Ultraschallsensor vorschriftsmäßig, andernfalls nicht.

Der Ultraschallsensor gemäß vorheriger Beschreibung wurde anhand des Beispiels eines Ultraschall-Transceivers beschrieben, der einen Ultraschall-Transducer, also einen Ultraschalwandler aufweist, der wechselweise zum Senden von Ultraschallwellen und zum Empfangen von z.B. Ultraschallechos betrieben wird. Die Erfindung ist aber auch anwendbar auf Ultraschall-Messsysteme, bei denen für das Senden der Ultraschall-Wellen ein Ultraschall-Sender und für das Empfangen von Echosignalen ein vom Ultraschall-Sender getrennter Ultraschall-Empfänger werden. Der Ultraschall-Empfänger hat nun erfindungsgemäß einen Generator zur Erzeugung des Diagnoseansteuerungssignals, wobei er in der Diagnosephase mit den gleichen Konfigurationsparametern bzw. mit dem gleichen Konfigurationsprofil betrieben wird, wie zuvor in dem besagten Betriebszyklus, in dem die Diagnosephase durchgeführt wird. Auch der Ultraschall-Sender wird parallel dazu zu Diagnosezwecken angesteuert, wie es zuvor für den Ultraschallsensor beschreiben ist. Das am Schwingelement des Ultraschall-Senders anstehende schwache Signal kann dann ebenfalls analysiert und damit die Funktionstüchtigkeit des Ultraschall-Sender analysiert/diagnostiziert werden.

### BEZUGSZEICHENLISTE

- 10: Ultraschall-Messsystems
- 12: Ultraschallsensor
- 14: Steuereinheit (Kommandierungseinheit)
- 16: Kommunikationsbus
- 18: Ansteuereinheit
- 20: Supply-Anschluss
- 22: GND-Anschluss
- 24: I/O-Schnittstelle
- 26: Generator
- 28: Treiber
- 30: Schwingelement
- 32: Anregungspfad
- 34: Empfangspfad
- 36: Analogsignal-Verarbeitungseinheit
- 38: Digitalsignal-Verarbeitungseinheit
- 40: Kommunikationsinterface
- 41: Anregungs-Ansteuerungssignal
- 42: Anregungsphase
- 43: Steuereinheit
- 44: Ausschwingphase
- 45: Schwingungssignal in der Anregungsphase
- 46: Empfangsphase
- 48: Pausenphase
- 50: Diagnosephase
- 51: Schwingungssignal in der Diagnosephase
- 52: Diagnoseansteuerungssignal
- 54: Schwingung in der Diagnosephase

## Patentansprüche

1. Verfahren zum Betreiben eines Ultraschall-Sensors, der ein elektrisch ansteuerbares Schwingelement und eine elektronische Schaltungsanordnung mit einer Ansteuerschaltung zum Ansteuern des Schwingelements und einer Signalverarbeitungsschaltung zur Verarbeitung von von dem Schwingelement gelieferten elektrischen Messsignalen aufweist und der Teil eines Mess- und Kommunikationsbussystems ist, das eine Busleitung aufweist, an die der mindestens eine Ultraschallsensor und eine Steuereinheit zur Ausgabe von Steuerdaten an den mindestens einen Ultraschallsensors sowie zum Empfang von Ergebnisdaten von dem mindestens einen Ultraschallsensor angeschlossen sind, wobei bei dem Verfahren
- der mindestens eine Ultraschallsensor zur Durchführung einer Vielzahl von zeitlich aufeinanderfolgenden Betriebszyklen mit einem von mehreren möglichen Konfigurationsparametersätzen betrieben wird,
- wobei jeder Betriebszyklus aufweist
- eine Anregungsphase, in der das Schwingelement des mindestens einen Ultraschallsensors zum Aussenden eines Ultraschallsignals mit einem Anregungs-Ansteuerungssignal mit einer vordefinierten Signalform und einer vordefinierten Amplitude, die durch den aktuell verwendeten Konfigurationsparametersatz bestimmt sind, angeregt wird,
- eine sich an die Anregungsphase anschließende Ausschwingphase, in der das Schwingelement ausschwingt,
- eine sich an die Ausschwingphase anschließende Empfangsphase, in der das Schwingelement durch potentielle Ultraschall-Echosignale angeregt wird und ein dadurch von dem Schwingelement erzeugtes elektrisches Messsignal in der Signalverarbeitungsschaltung verarbeitet wird,
- eine Datenübertragungsphase zur Übertragung von das Ergebnis der Signalverarbeitung repräsentierenden Ergebnisdaten von dem mindestens einen Ultraschallsensor über die Busleitung an die Steuereinheit und
- eine Pausenphase zwischen dem Ende der Empfangsphase und dem Beginn der Datenübertragungsphase und
- wobei für vorgebbare Betriebszyklen der Aufeinanderfolge von Betriebszyklen innerhalb der Pausenphase eines Betriebszyklus eine Diagnosephase zur Überprüfung des mindestens einen Ultraschallsensors auf seine Funktionssicherheit hin durchgeführt wird, indem
- das Schwingelement des mindestens einen Ultraschallsensors mit einem Diagnoseansteuerungssignal angeregt wird, das die gleiche Signalform wie das Anregungs-Ansteuerungssignal aufweist, welches in der Anregungsphase des besagten Betriebszyklus zum Anregen des Schwingelements verwendet worden ist, und eine um mehrere Größenordnungen kleinere Amplitude als das Anregungs-Ansteuerungssignal aufweist.

2. Verfahren nach Anspruch 1, **dadurch gekennzeichnet, dass** jeder Konfigurationsparametersatz die Form des Anregungs-Ansteuerungssignals, die Größe von dessen Amplitude, die Größe der Amplitude des Diagnoseansteuerungssignals und Vorgaben für Betriebsparameter von im Anregungspfad für das Anregungs-Ansteuerungssignal und das Diagnoseansteuerungssignal sowie im Empfangspfad für vom mindestens einen Ultraschallsensor gelieferten Mess- und Funktionssicherheitsprüfsignal der Signalverarbeitungsschaltung umfasst.

3. Verfahren nach Anspruch 1 oder 2, **dadurch gekennzeichnet, dass** der mindestens eine Ultraschallsensor einen Transformator zur Transformation des Anregungs-Ansteuerungssignals und des Diagnoseansteuerungssignals aufweist oder dass der mindestens eine Ultraschallsensor transformatorfrei ist.

4. Verfahren nach einem der Ansprüche 1 bis 3, **dadurch gekennzeichnet, dass** die Größenordnung, um die die Amplitude des Diagnoseansteuerungssignals kleiner ist als die Amplitude des Anregungs-Ansteuerungssignals des besagte Betriebszyklus ist, 10⁶ bis 10³, insbesondere 10⁵ bis 10³, insbesondere 10⁴ bis 10³ und vorzugsweise 5 * 10⁵ bis 6 * 10³ beträgt.

5. Verfahren nach einem der Ansprüche 1 bis 4, **dadurch gekennzeichnet, dass** nach einer regelmäßigen oder auch variablen Anzahl von Betriebszyklen der mindestens eine Ultraschallsensor mit einem Betriebszyklus mit Diagnose des mindestens einen Ultraschallsensors auf seine Funktionssicherheit betrieben wird.

6. Verfahren nach Anspruch 5, **dadurch gekennzeichnet, dass** in jedem Betriebszyklus eine Diagnose des mindestens einen Ultraschallsensors auf seine Funktionssicherheit durchgeführt wird.

7. Verfahren nach einem der Ansprüche 1 bis 6, **dadurch gekennzeichnet, dass** der Ultraschallsensor als Ultraschall-Transceiver mit einem einzigen Schwingelement zum Aussenden von Ultraschallwellen und zum Empfang von Ultraschallechowellen aufweist.

8. Verfahren nach einem der Ansprüche 1 bis 6, **dadurch gekennzeichnet, dass** der Ultraschallsensor zweiteilig ausgebildet ist und einen Ultraschallsender sowie einen Ultraschallempfänger aufweist, die beide jeweils ein Schwingelement aufweisen, wobei in der Diagnosephase das Schwingelement des Ultraschallempfängers und/oder das Schwingelement des Ultraschallsenders angeregt wird/werden und somit der Empfangspfad des Ultraschallempfängers und/oder der Anregungspfad des Ultraschallsenders auf Funktionssicherheit hin überprüft wird/werden.
